(19) Europäisches Patentamt
European Patent Office
Office européen des brevets

(11) EP 4 704 025 A1

(12) EUROPEAN PATENT APPLICATION

(43) Date of publication:
04.03.2026 Bulletin 2026/10

(21) Application number: 25183354.7

(22) Date of filing: 17.06.2025

(51) International Patent Classification (IPC):
G06T 5/50 (2006.01)      G06T 5/73 (2024.01)

(52) Cooperative Patent Classification (CPC):
G06T 5/73; G06T 5/50; G06T 2207/10028;
G06T 2207/10148

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 26.08.2024 JP 2024144088

(71) Applicant: SCREEN Holdings Co., Ltd.
Kyoto-shi, Kyoto 602-8585 (JP)

(72) Inventor: YASUDA, Takuya
Kyoto, 602-8585 (JP)

(74) Representative: Goddar, Heinz J.
Boehmert & Boehmert
Anwaltspartnerschaft mbB
Pettenkoferstrasse 22
80336 München (DE)

(54) **IMAGE PROCESSING METHOD, IMAGE PROCESSING APPARATUS, IMAGE PICKUP APPARATUS, AND COMPUTER-READABLE PROGRAM**

(57) In an image processing method, a plurality of sharpnesses are calculated at each pixel position from a plurality of picked-up images which are acquired while a focal position is changed along an optical axis, and by comparing the plurality of sharpnesses at each pixel position with one another, an image reference value to be referred for determination of a luminance value at the pixel position of an all-in-focus image is determined. The luminance value at each pixel position of the all-in-focus image is calculated on the basis of image reference values in a pixel position group including the pixel position and surrounding pixel positions of the pixel position. A composite height at each pixel position is acquired on the basis of image reference values and/or sharpnesses in a pixel position group including the pixel position and the surrounding pixel positions, and a height map is thereby generated.

FIG. 5

EP 4 704 025 A1

**Description**

[CROSS REFERENCE TO RELATED APPLICATION]

The present application claims the benefit of priority to Japanese Patent Application No. 2024-144088 filed on August 26, 2024, the content of which is incorporated herein by reference in its entirety.

**TECHNICAL FIELD**

The present invention relates to a technique for generating an all-in-focus image and a height map to be used for analysis of the all-in-focus image.

**BACKGROUND ART**

A method of generating an image in which a whole target is in focus (i.e., an all-in-focus image), by imaging the target while changing a focal position along an optical axis, to thereby acquire a plurality of picked-up images, and then combining portions of the picked-up images, which are in focus, has been conventionally used in a microscope or the like. In Japanese Patent Application Laid Open Gazette No. 2018-42006 (Document 1), for example, a plurality of picked-up images are acquired while a focal position is changed, and by comparing respective sharpnesses of the plurality of picked-up images with one another at each pixel position (coordinates), determined is an image reference value which is a number for the picked-up image to be referred for a luminance value at the pixel position of an all-in-focus image. Then, by reflecting respective luminance values of the picked-up images indicated by the image reference values at surrounding pixel positions of each pixel position on the luminance value of the picked-up image indicated by the image reference value at the pixel position, a luminance value at the pixel position of the all-in-focus image is calculated. Further, in Japanese Patent Application Laid Open Gazette No. 2022-51094 (Document 2), at each pixel position, a predetermined number of higher-order sharpnesses are extracted as correction sharpnesses from the sharpnesses of the plurality of picked-up images (images obtained by changing a focal position), and the predetermined number of image reference values which are respective numbers for the picked-up images corresponding to the predetermined number of correction sharpnesses, respectively, are determined. Then, a luminance value at the pixel position of the all-in-focus image is calculated on the basis of the predetermined number of image reference values and the predetermined number of correction sharpnesses.

Further, in Japanese Patent Application Laid Open Gazette No. 2015-111822 (Document 3), edges are detected as characteristic features from a plurality of different input images which are picked up while a focal length is changed, and by using the strengths of the edges, estimated is a depth which is information indicating which input image is in focus at a target pixel among the plurality of input images. A depth map which makes it possible to specify at a pixel of each coordinates the input image which is in focus is thereby generated, and it becomes possible to generate an image in which a subject that is present at a desired height is in focus.

The image reference value at each pixel position in Document 1 can be regarded as a focal position (focus position) of the target at the pixel position, i.e., the height of the target. In this case, an array of the image reference values at all the pixel positions serves as a height map indicating a distribution of the heights of the target. In the analysis of the target by using the all-in-focus image, it is considered possible to extract an analysis target area in the all-in-focus image and acquire an average value of the heights of the area, or the like, as a feature value by using the height map. In the all-in-focus image generated in Document 1, however, since the luminance value at each pixel position is influenced by the surrounding pixel positions, in some cases, there is a discrepancy between the above-described height map and an actual all-in-focus image.

**SUMMARY OF THE INVENTION**

It is an object of the present invention to generate a smooth all-in-focus image and an appropriate height map adjusted to the all-in-focus image.

A first aspect of the present invention is intended for an image processing method for generating an all-in-focus image and a height map to be used for analysis of the all-in-focus image. The image processing method according to the first aspect of the present invention includes a) preparing a plurality of picked-up images acquired by imaging a target while changing a focal position along an optical axis, b) calculating a plurality of sharpnesses from the plurality of picked-up images, respectively, at each pixel position, c) determining a number for at least one picked-up image to be referred for determination of a luminance value at the each pixel position of an all-in-focus image, as an image reference value, by comparison among the plurality of sharpnesses at the each pixel position, d) generating the all-in-focus image by calculating the luminance value at the each pixel position of the all-in-focus image on the basis of image reference values in a pixel position group including the each pixel position and surrounding pixel positions of the each pixel position, and e) generating a height map by acquiring a composite height at the each pixel position on the basis of image reference values and/or sharpnesses in a pixel position group including the each pixel position and surrounding pixel positions of the each pixel position.

According to the present invention, it is possible to generate a smooth all-in-focus image and an appropriate height map adjusted to the all-in-focus image.

A second aspect of the present invention is intended for the image processing method according to the first aspect, and in the image processing method according to the second aspect of the present invention, the pixel position group in the operation d) is the same as that in the operation e).

A third aspect of the present invention is intended for the image processing method according to the first aspect (or the first or second aspect), and in the image processing method according to the third aspect of the present invention, the composite height at the each pixel position is calculated by reflecting image reference values at the surrounding pixel positions on the image reference value at the each pixel position with such weighting as to increase an effect as a sharpness increases in the operation e).

A fourth aspect of the present invention is intended for the image processing method according to the first aspect (or any one of the first to third aspects), and in the image processing method according to the fourth aspect of the present invention, the composite height at the each pixel position is calculated by reflecting image reference values at the surrounding pixel positions on the image reference value at the each pixel position with such weighting as to increase an effect as a distance decreases in the operation e).

A fifth aspect of the present invention is intended for the image processing method according to any one of the first to fourth aspects, and the image processing method according to the fifth aspect of the present invention further includes specifying an analysis target area in the all-in-focus image, and calculating a feature value on a height of the analysis target area by using the height map.

A sixth aspect of the present invention is intended for an image processing apparatus for generating an all-in-focus image and a height map to be used for analysis of the all-in-focus image. The image processing apparatus according to the sixth aspect of the present invention includes an image memory for memorizing therein a plurality of picked-up images acquired by imaging a target while changing a focal position along an optical axis, a sharpness calculation part for calculating a plurality of sharpnesses from the plurality of picked-up images, respectively, at each pixel position, an image reference value determination part for determining a number for at least one picked-up image to be referred for determination of a luminance value at the each pixel position of an all-in-focus image, as an image reference value, by comparison among the plurality of sharpnesses at the each pixel position, an all-in-focus image generation part for generating the all-in-focus image by calculating the luminance value at the each pixel position of the all-in-focus image on the basis of image reference values in a pixel position group including the each pixel position and surrounding pixel positions of the each pixel position, and a height map generation part for generating a height map by acquiring a composite height at the each pixel position on the basis of image reference values and/or sharpnesses in a pixel position group including the each pixel position and surrounding pixel positions of the each pixel position.

A seventh aspect of the present invention is intended for the image processing apparatus according to the sixth aspect, and in the image processing apparatus according to the seventh aspect of the present invention, the pixel position group in the all-in-focus image generation part is the same as that in the height map generation part.

An eighth aspect of the present invention is intended for the image processing apparatus according to the sixth aspect (or the sixth or seventh aspect), and in the image processing apparatus according to the eighth aspect of the present invention, the height map generation part reflects image reference values at the surrounding pixel positions on the image reference value at the each pixel position with such weighting as to increase an effect as a sharpness increases, to thereby acquire the composite height at the each pixel position.

A ninth aspect of the present invention is intended for the image processing apparatus according to the sixth aspect (or any one of the sixth to eighth aspects), and in the image processing apparatus according to the ninth aspect of the present invention, the height map generation part reflects image reference values at the surrounding pixel positions on the image reference value at the each pixel position with such weighting as to increase an effect as a distance decreases, to thereby acquire the composite height at the each pixel position.

A tenth aspect of the present invention is intended for the image processing apparatus according to the sixth aspect (or any one of the sixth to ninth aspects), and the image processing apparatus according to the tenth aspect of the present invention further includes a target area specifying part for specifying an analysis target area in the all-in-focus image and a feature value calculation part for calculating a feature value on a height of the analysis target area by using the height map.

An eleventh aspect of the present invention is intended for an image pickup apparatus. The image pickup apparatus according to the eleventh aspect of the present invention includes the image processing apparatus according to any one of the sixth to tenth aspects, an image pickup part for imaging the target, a lighting part for emitting light toward the target, and a focal position changing mechanism for changing a focal position of the image pickup part along an optical axis.

A twelfth aspect of the present invention is intended for a computer-readable program to cause a computer to generate an all-in-focus image and a height map to be used for analysis of the all-in-focus image, and the program is executed by a computer to cause the computer to perform a) preparing a plurality of picked-up images acquired by imaging a target while changing a focal position along an optical axis, b) calculating a plurality of sharpnesses from the plurality of picked-up images, respectively, at each pixel position, c) determining a number for at least one picked-up image to be referred for determination of a luminance value at the each pixel position of an all-in-focus image, as an image reference value, by comparison among the plurality of sharpnesses at the each pixel position, d) generating the all-in-focus image by calculating the luminance value at the each pixel position of the all-in-focus image on the basis of image reference values in a pixel position group including the each pixel position and surrounding pixel positions of the each pixel position, and e) generating a height map by acquiring a composite height at the each pixel position on the basis of image reference values and/or sharpnesses in a pixel position group including the each pixel position and surrounding pixel positions of the each pixel position.

These and other objects, features, aspects and advantages of the present invention will become more apparent from the following detailed description of the present invention when taken in conjunction with the accompanying drawings.

## BRIEF DESCRIPTION OF DRAWINGS

FIG. 1 is a view showing a configuration of an image pickup apparatus;

FIG. 2 is a perspective view showing one example of a well plate;

FIG. 3 is a view showing a configuration of a computer;

FIG. 4 is a block diagram showing a functional configuration of a control part;

FIG. 5 is a flowchart showing an operation flow for generating an all-in-focus image and a height map;

FIG. 6 is a longitudinal sectional view showing a well;

FIG. 7 is a view showing picked-up images;

FIG. 8 is a view showing an array of image reference values;

FIG. 9 is a view showing an array of reference sharpnesses;

FIG. 10 is a view showing that surrounding pixel positions produce an effect on a specified pixel position;

FIG. 11 is a view showing an all-in-focus image;

FIG. 12 is a view showing an analysis target area; and

FIG. 13 is a view used for explaining processing of Comparative Example.

## DESCRIPTION OF EMBODIMENTS

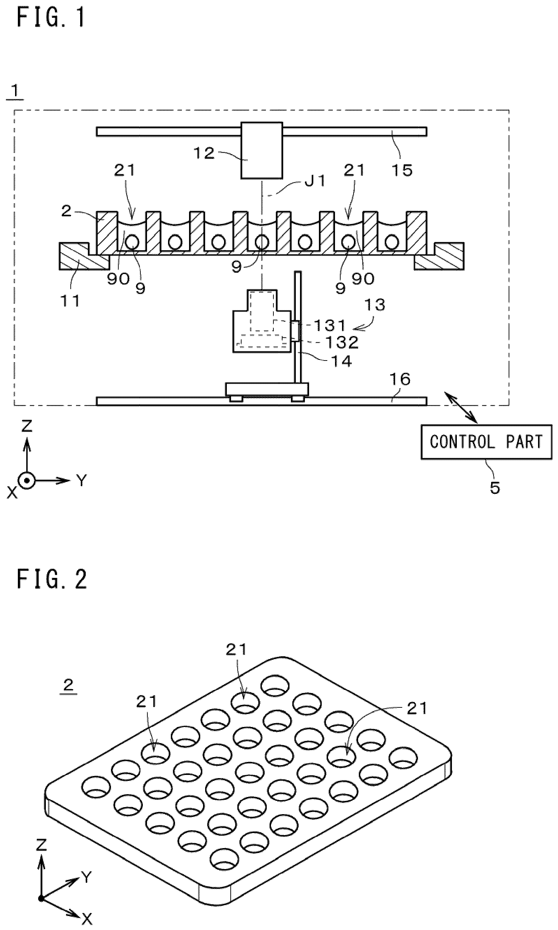

FIG. 1 is a view showing a configuration of an image pickup apparatus 1 in accordance with one preferred embodiment of the present invention. Further, FIG. 2 is a perspective view showing one example of a well plate 2 used in the image pickup apparatus 1. In FIGs. 1 and 2, three directions orthogonal to one another are shown as an X direction, a Y direction, and a Z direction by using arrows. In the exemplary case shown in FIGs. 1 and 2, the X direction and the Y direction are horizontal directions perpendicular to each other, and the Z direction is a vertical direction (i.e., an up-and-down direction). Depending on a target to be imaged in the image pickup apparatus 1, the Z direction may be a direction different from the vertical direction.

The image pickup apparatus 1 is an apparatus for imaging a sample 9 held by the well plate 2. The sample 9 includes, for example, cells, cell clusters such as spheroids, organoids, or the like, or a biological sample such as bacteria or the like. In the following description, the cells, the cell clusters, the bacteria, and the like are collectively referred to also as "cells or the like".

The well plate 2 is a substantially flat plate-like sample container. The well plate 2 is formed of a material having transparency (for example, a transparent resin) . In one main surface (a main surface on a (+Z) side, in the example shown in FIGs. 1 and 2) of the well plate 2, provided are a plurality of wells 21 which are recessed portions. The plurality of wells 21 are regularly arranged, for example, along the X direction and the Y direction. Each of the wells 21 has, for example, a substantially circular shape in a plan view. The number, the arrangement, the shape, or the like, of wells 21 in the well plate 2 may be changed as appropriate.

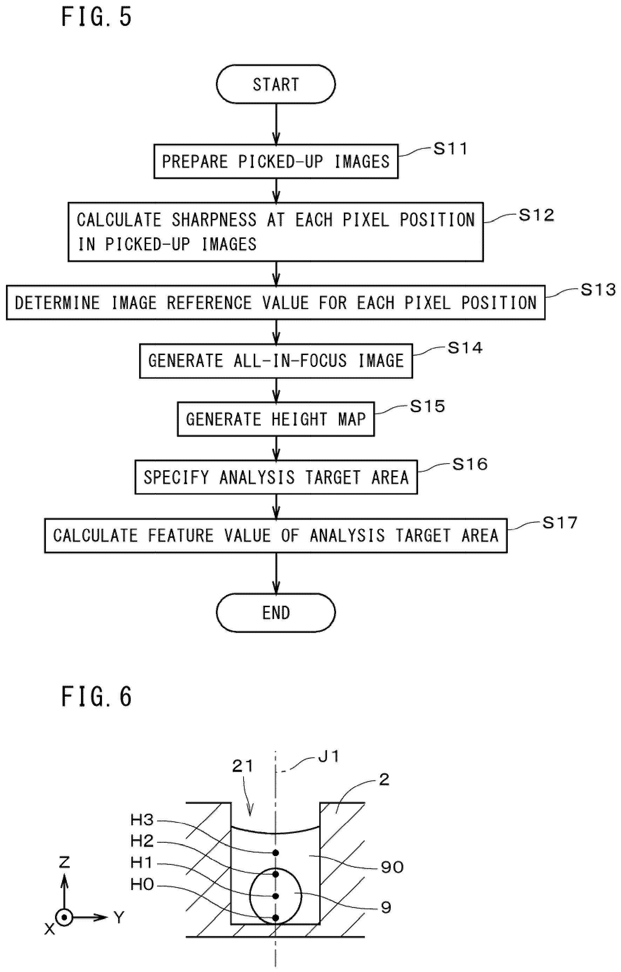

In each of the wells 21 of the well plate 2, a sample 9 which is a target to be imaged by the image pickup apparatus 1 is held together with a liquid or gel culture medium 90. The sample 9 is cells or the like having transparency, which is cultured in the culture medium 90 under predetermined culture conditions. Though the cells or the like in each well 21 are shown as one cluster in FIG. 1 and later-described FIG. 6, the cells or the like may be present as a plurality of clusters separated from one another. Further, the image pickup apparatus 1 may be used for imaging the sample 9 held in a flat sample container called a dish, instead of the well plate 2.

The image pickup apparatus 1 includes a holder 11, a lighting part 12, an image pickup part 13, an up-and-down moving mechanism 14, a lighting part moving mechanism 15, an image pickup part moving mechanism 16, and a control part 5. The holder 11 is a holding part for holding the well plate 2. The holder 11 is in contact with a peripheral portion of the main surface (i.e., the lower surface) on a (-Z) side of the well plate 2 from below, to thereby hold the well plate 2 in a substantially horizontal state.

The lighting part 12 is disposed above the holder 11 and emits illumination light downward (i.e., toward the (-Z) side). The illumination light emitted from the lighting part 12 is irradiated onto the well plate 2 held by the holder 11. The sample 9 inside the well 21 is thereby irradiated from above (i.e., from the (+Z) side). The lighting part 12 includes a light source and an illumination optical system which are not shown. As the light source, for example, a white LED (Light Emitting Diode) can be used.

The image pickup part 13 is disposed below the holder 11. The image pickup part 13 is a camera and includes an image pickup optical system 131 and an image pickup element 132. The image pickup optical system 131 includes a plurality of optical elements (not shown) including an objective lens. An optical axis J1 of the image pickup optical system 131 extends in substantially parallel with the Z direction (i.e., the up-and-down direction). The image pickup element 132 is disposed below the image pickup optical system 131. The image pickup element 132 is an area image sensor having a two-dimensional light receiving surface. As the image pickup element 132, for example, a CCD (Charge Coupled Device) or a CMOS (Complementary Metal-Oxide Semiconductor) can be used.

As described later, the image pickup part 13 is disposed vertically below one well 21 of the well plate 2. Further, the lighting part 12 is disposed vertically above the well 21 and faces the image pickup part 13 in the up-and-down direction with the well 21 interposed therebetween. The illumination light emitted from the lighting part 12 enters the well 21 from above and illuminates the sample 9 inside the well 21. The light going downward from a bottom surface (i.e., a surface on the (-Z) side) of the well 21 and having passed through the well plate 2 enters the light receiving surface of the image pickup element 132 through the image pickup optical system 131 of the image pickup part 13. The image pickup element 132 picks up an image of the sample 9, which is formed on the light receiving surface thereof by the image pickup optical system 131. The image of the sample 9 (hereinafter, referred to as a "picked-up image") picked up by the image pickup part 13 is a transmission image of the sample 9.

The up-and-down moving mechanism 14 moves the image pickup part 13 in the up-and-down direction. The lighting part moving mechanism 15 moves the lighting part 12 in the X direction and the Y direction. The image pickup part moving mechanism 16 moves the image pickup part 13 and the up-and-down moving mechanism 14 in the X direction and the Y direction. The up-and-down moving mechanism 14, the lighting part moving mechanism 15, and the image pickup part moving mechanism 16 each have, for example, a ball screw, a motor, or the like. In the up-and-down moving mechanism 14, the lighting part moving mechanism 15, and the image pickup part moving mechanism 16, any other mechanism such as a linear motor or the like may be used.

In generation of an all-in-focus image described later, in a state where the lighting part 12 and the image pickup part 13 are disposed vertically above and below one well 21, respectively, by moving the image pickup part 13 by the up-and-down moving mechanism 14 in the up-and-down direction (the direction of optical axis J1), acquired are a plurality of picked-up images which are picked up with the image pickup part 13 placed at different positions in the up-and-down direction. In other words, a plurality of picked-up images are acquired for the sample 9 while the focal position is changed along the optical axis J1. After finishing the image pickup of the sample 9 inside the well 21, the lighting part 12 and the image pickup part 13 are moved in the horizontal direction (i.e., in the X direction and the Y direction) by the lighting part moving mechanism 15 and the image pickup part moving mechanism 16 and disposed vertically above and below another well 21, respectively. Then, the sample 9 inside another well 21 is imaged in substantially the same manner as above. In the image pickup apparatus 1, a moving mechanism for moving the lighting part 12 and the image pickup part 13 as one unit may be provided. Further, the respective samples 9 inside a plurality of wells 21 may be imaged by the image pickup part 13 at the same time.

The control part 5 controls constituent elements of the image pickup apparatus 1, such as the lighting part 12, the image pickup part 13, the up-and-down moving mechanism 14, the lighting part moving mechanism 15, the image pickup part moving mechanism 16, and the like. Further, the control part 5 memorizes a plurality of picked-up images picked up by the image pickup part 13 and performs image processing for generating an all-in-focus image or the like from the plurality of picked-up images.

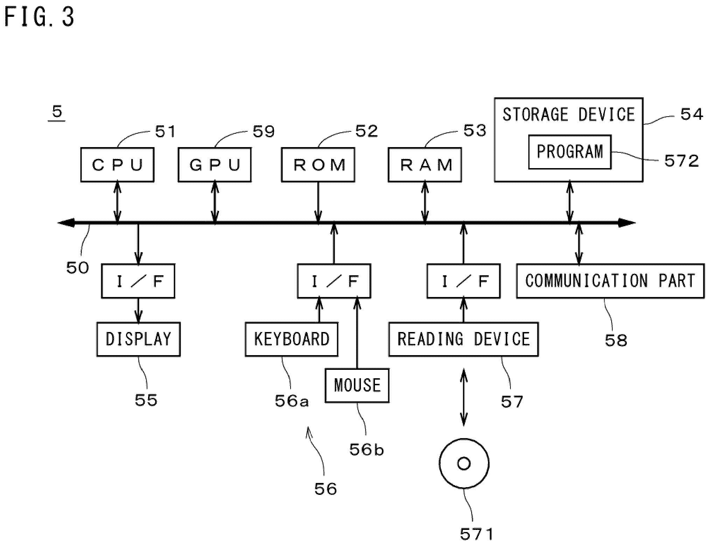

FIG. 3 is a view showing a configuration of a computer functioning as the control part 5. The computer has a configuration of a general computer system including a CPU 51, a ROM 52, a RAM 53, a storage device 54, a display 55, an input part 56, a reading device 57, a communication part 58, a GPU 59, and a bus 50. The CPU 51 performs various arithmetic operations. The GPU 59 performs various arithmetic operations on the image processing or the like. The ROM 52 stores therein a basic program. The RAM 53 stores therein various information. The storage device 54 memorizes therein information. The display 55 is a display part for displaying thereon various information such as an image or the like.

The input part 56 includes a keyboard 56a and a mouse 56b for receiving an input from an operator. The reading device 57 reads information from a non-transitory computer-readable recording medium 571 such as an optical disk, a magnetic disk, a magneto-optic disk, a memory card, or the like. The display 55, the keyboard 56a, the mouse 56b, and the reading device 57 are connected to the bus 50 via an interface I/F. The communication part 58 transmits and receives a signal to/from any other constituent element of the image pickup apparatus 1, or the like. The bus 50 is a signal circuit for connecting the CPU 51, the GPU 59, the ROM 52, the RAM 53, the storage device 54, the display 55, the input part 56, the reading device 57, and the communication part 58 to one another.

In the image pickup apparatus 1, a program 572 is read out from the recording medium 571 through the reading device 57 in advance and stored into the storage device 54. The program 572 has only to be computer-readable, and may be stored into the storage device 54, for example, via a network. The CPU 51 and the GPU 59 perform an arithmetic operation while using the RAM 53 and the storage device 54 in accordance with the program 572. The CPU 51 and the GPU 59 serve as a processor in the image pickup apparatus 1. Any constituent element other than the CPU 51 or the GPU 59 may be adopted to serve as the processor.

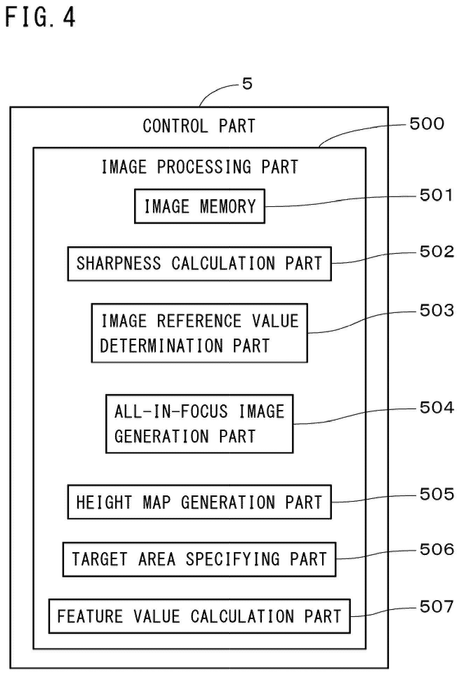

FIG. 4 is a block diagram showing a functional configuration of the control part 5 implemented when the above-described computer performs arithmetic processing or the like in accordance with the program 572. The control part 5 has an image processing part 500. The image processing part 500 is an image processing apparatus and generates an all-in-focus image and a height map adjusted to the all-in-focus image, as described later. The image processing part 500 includes an image memory 501, a sharpness calculation part 502, an image reference value determination part 503, an all-in-focus image generation part 504, a height map generation part 505, a target area specifying part 506, and a feature value calculation part 507. Details of these functions will be described later. All or part of the functions of the image processing part 500 may be implemented by a dedicated electric circuit, and each of the functions may be implemented by an individual program. Further, the image processing part 500 may be implemented by a plurality of computers.

Next, with reference to FIG. 5, description will be made on processing for generating the all-in-focus image and the height map. As described above, an operation of the image pickup apparatus 1 shown in FIG. 1 is controlled by the control part 5. First, the lighting part moving mechanism 15 and the image pickup part moving mechanism 16 are driven, and the lighting part 12 and the image pickup part 13 are thereby disposed above and below one well 21, respectively. Subsequently, the up-and-down moving mechanism 14 is driven, and the position of the image pickup part 13 in the up-and-down direction is thereby adjusted. Then, the image pickup part 13 acquires an picked-up image of the sample 9. The picked-up image is transferred to the image processing part 500 (see FIG. 4) and memorized into the image memory 501. In the image pickup apparatus 1, image pickup of the sample 9 (i.e., acquisition of the picked-up image) is repeated by the image pickup part 13 while the position of the image pickup part 13 in the up-and-down direction is changed by the up-and-down moving mechanism 14.

FIG. 6 is a longitudinal sectional view showing one well 21. In the exemplary case shown in FIG. 6, the sample 9 is imaged in a state where the focal position on the optical axis J1 of the image pickup part 13 is arranged at each of four positions H0 to H3 represented by solid circles. Thus, by imaging the sample 9 while changing the focal position along the optical axis J1, the plurality of picked-up images are acquired. The plurality of picked-up images are memorized into the image memory 501 and prepared (Step S11). Typically, the four positions H0 to H3 are aligned at regular intervals in the up-and-down direction (i.e., the Z direction). In an actual image pickup apparatus 1, on the optical axis J1, many picked-up images are acquired by sequentially arranging the focal position at sufficiently more than four positions (e.g., several ten positions). Hereinafter, for explanatory convenience, description will be made by using the four picked-up images acquired in a state where the focal position is sequentially arranged at the four positions H0 to H3 in FIG. 6. Further, in the present specification, the direction along the optical axis J1 is a height direction.

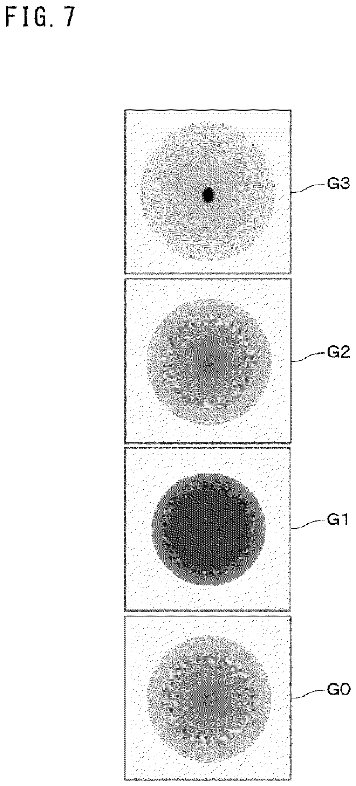

FIG. 7 is a view showing a plurality of picked-up images G0 to G3 acquired in a state where the focal position is arranged at a plurality of positions H0 to H3. In each of the plurality of picked-up images G0 to G3, pixels are arranged in a row direction and a column direction. The plurality of pixels having the same position (hereinafter, referred to as a "pixel position") in the row direction and the column direction in the plurality of picked-up images G0 to G3 indicate a position overlapping one another in the direction of the optical axis J1 inside the well 21. Continuous numbers are given to the plurality of picked-up images G0 to G3, and to the four picked-up images G0 to G3 in FIG. 7, given are the numbers of "0", "1", "2", and "3", respectively. Further, at the center of the picked-up image G3, an unnecessary substance appears.

After preparing the plurality of picked-up images G0 to G3, in the sharpness calculation part 502, a sharpness at each pixel position is calculated for each of the plurality of picked-up images G0 to G3 (Step S12). The sharpness is an index indicating clarity of an image at the pixel position and in the vicinity thereof, and herein the sharpness becomes higher as the clarity increases. The sharpness is, for example, edge strength, luminance variation, or the like, and typically calculated on the basis of a luminance change of pixels in an area which has a predetermined size and centers on the pixel position. In the calculation of the sharpness, a variance value of the luminances of the surrounding pixels of the pixel position, the maximum value of the luminances thereof, the minimum value of the luminances thereof, the luminance value of the pixel position, and the like may be used.

After calculating the plurality of sharpnesses from the plurality of picked-up images G0 to G3 at each pixel position, in the image reference value determination part 503, the plurality of sharpnesses at each pixel position are compared with one another. Then, a number for the picked-up image having the highest sharpness among the plurality of sharpnesses is determined as an image reference value for the pixel position (Step S13). The image reference value is the number for the picked-up image to be referred for determination of the luminance value at the pixel position of the all-in-focus image. At one pixel position, for example, when the sharpness of the picked-up image G1 is the highest among the plurality of sharpnesses in the plurality of picked-up images G0 to G3, the image reference value at the pixel position is "1".

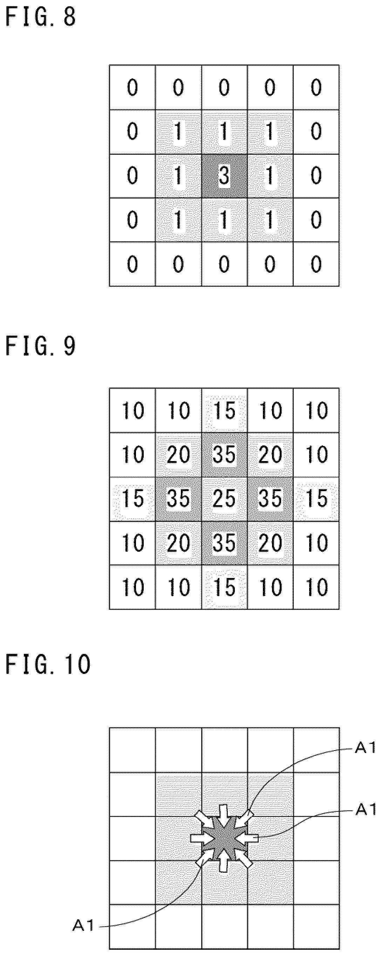

FIG. 8 is a view showing an array of the image reference values at the plurality of pixel positions. Herein, for explanatory convenience, it is assumed that the number of pixels constituting each of the picked-up images G0 to G3 is $5\times5=25$ pixels. Paying attention to a central pixel position, in the exemplary case shown in FIG. 7, the sharpness of the picked-up image G3 is high, and therefore, as shown in FIG. 8, the image reference value at the central pixel position is "3". At the 8-neighbor pixel positions of the central pixel position, the sharpness of the picked-up image G1 is high and the image reference value is thereby "1". In FIG. 8, the color of the pixel position becomes darker as the image reference value increases.

Further, the image reference value determination part 503 also specifies the sharpness (hereinafter, referred to as a "reference sharpness") corresponding to the image reference value at each pixel position. FIG. 9 is a view showing an array of the reference sharpnesses at the plurality of pixel positions. The reference sharpness at each pixel position refers to the sharpness at the pixel position of the picked-up image indicated by the image reference value at the pixel position. In the array of the image reference values shown in FIG. 8, for example, at the pixel position whose image reference value is "1", the sharpness at the pixel position of the picked-up image G1 serves as the reference sharpness. In FIG. 9, the color of the pixel position becomes darker as the reference sharpness increases.

Subsequently, the all-in-focus image generation part 504 calculates the luminance value at each pixel position of the all-in-focus image. At that time, in the calculation of the luminance value at each pixel position, the image reference values at surrounding pixel positions of the pixel position are considered (referred). Specifically, the all-in-focus image generation part 504 calculates the luminance value at each pixel position of the all-in-focus image by using, for example, Eq. 1.

(Eq. 1)

$$V(xn, yn)$$

$$= \frac{\displaystyle\sum_{k=-fx}^{fx} \sum_{l=-fy}^{fy} I(A(xn+k, yn+l), xn, yn) \exp\left(-\frac{k^2+l^2}{2\sigma_d^2}\right) \exp\left(-\frac{\left(1-S(xn+k, yn+l)\right)^2}{2\sigma_s^2}\right)}{\displaystyle\sum_{k=-fx}^{fx} \sum_{l=-fy}^{fy} \exp\left(-\frac{k^2+l^2}{2\sigma_d^2}\right) \exp\left(-\frac{\left(1-S(xn+k, yn+l)\right)^2}{2\sigma_s^2}\right)}$$

In Eq. 1, the row direction and the column direction are represented as the x direction and the y direction, respectively, and "$V(xn, yn)$" represents a luminance value of the pixel position (hereinafter, referred to as a "specified pixel position") of any coordinates $(xn, yn)$ in the all-in-focus image. "k" and "l" represent respective distances in the x direction and the y direction between the pixel position to be referred with respect to the specified pixel position and the specified pixel position. "fx" and "fy" represent respective maximum values of the distances in the x direction and the y direction and a range of the pixel positions to be referred with respect to the specified pixel position. "$I(A(xn+k, yn+l), xn, yn)$" represents a luminance value at the specified pixel position of the picked-up image indicated by the image reference value $A(xn+k, yn+l)$ at the pixel position of the coordinates $(xn+k, yn+l)$. "$S(xn+k, yn+l)$" represents a reference sharpness at the pixel position of the coordinates $(xn+k, yn+l)$. Herein, it is assumed that the reference sharpness is normalized to a value from 0 to 1. "$\sigma_d$" represents a weighting factor for the distance and "$\sigma_s$" represents a weighting factor for the reference sharpness. In Eq. 1, a weighting amount for the distance and a weighting amount for the reference sharpness are represented by a Gaussian factor.

In Eq. 1, the luminance value at the specified pixel position of the all-in-focus image is calculated by reflecting the luminance value at the specified pixel position of the picked-up image indicated by the image reference value at each pixel position around the specified pixel position on the luminance value at the specified pixel position of the picked-up image indicated by the image reference value at the specified pixel position. Thus, by using a plurality of luminance values derived from image reference values in a pixel position group including the specified pixel position and the surrounding pixel positions of the specified pixel position, the luminance value at the specified pixel position of the all-in-focus image is calculated. In FIG. 10, when the central pixel position in the array of the image reference values shown in FIG. 8 is assumed as the specified pixel position, it is shown, by a plurality of arrows A1, that the image reference values at the surrounding pixel positions produce an effect on the luminance value at the specified pixel position.

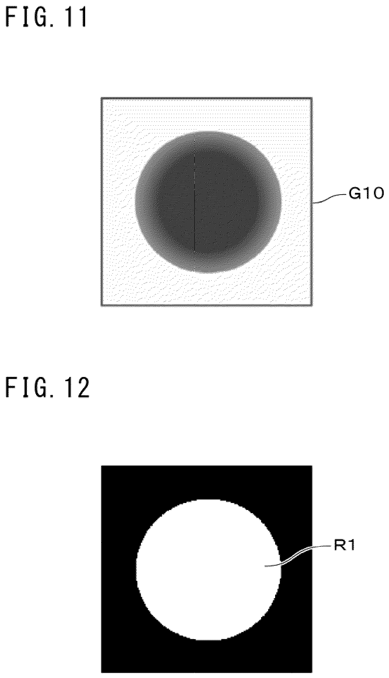

In Eq. 1, to the luminance value (the luminance value at the specified pixel position) of the picked-up image indicated by the image reference value of the surrounding pixel position, given are a weight in accordance with the distance between the surrounding pixel position and the specified pixel position and a weight in accordance with the reference sharpness at the surrounding pixel position. In more detail, the weight (an effect on the luminance value of the all-in-focus image) increases as the distance of the pixel position from the specified pixel position decreases. Further, the weight increases as the reference sharpness at the surrounding pixel position increases. In the all-in-focus image generation part 504, by using Eq. 1, the luminance values at all the pixel positions are calculated. An all-in-focus image G10 shown in FIG. 11 is thereby generated (Step S14). In the all-in-focus image G10, in the area where the image reference value is switched, it is possible to smoothly change the luminance value. Further, in the all-in-focus image generation part 504, the luminance value at each surrounding pixel position of the specified pixel position in the picked-up image indicated by the image reference value at the surrounding pixel position may be reflected on the luminance value at the specified pixel position of the picked-up image indicated by the image reference value at the specified pixel position.

Subsequently, the height map generation part 505 calculates a composite height at each pixel position. Herein, since the image reference value at each pixel position indicates a number for the picked-up image which is most in focus on the pixel position, the image reference value can be regarded as the height of the sample 9 at the pixel position. On the other hand, the all-in-focus image generation part 504 calculates the luminance value at each pixel position of the all-in-focus image G10 by using the image reference values at the surrounding pixel positions of the pixel position as well as the image reference value at the pixel position (see FIG. 10). Therefore, in the calculation of the composite height, like in the calculation of the luminance value of the all-in-focus image G10, on the image reference value at each pixel position, reflected are the image reference values at the surrounding pixel positions of the pixel position. Specifically, the composite height at each pixel position is calculated by using Eq. 2.

(Eq. 2)

$$D(xn, yn)$$

$$= \frac{\sum_{k=-fx}^{fx} \sum_{l=-fy}^{fy} A(xn + k, yn + l) \exp\left(-\frac{k^2 + l^2}{2\sigma_d^2}\right) \exp\left(-\frac{(1 - S(xn + k, yn + l))^2}{2\sigma_s^2}\right)}{\sum_{k=-fx}^{fx} \sum_{l=-fy}^{fy} \exp\left(-\frac{k^2 + l^2}{2\sigma_d^2}\right) \exp\left(-\frac{(1 - S(xn + k, yn + l))^2}{2\sigma_s^2}\right)}$$

In Eq. 2, like in Eq. 1, the row direction and the column direction are represented as the x direction and the y direction, respectively, and "$D(xn, yn)$" represents a composite height of the pixel position (i.e., specified pixel position) of any coordinates $(xn, yn)$ in the all-in-focus image G10. "k" and "l" represent respective distances in the x direction and the y direction between the pixel position to be referred (i.e., the pixel position whose image reference value is reflected) with respect to the specified pixel position and the specified pixel position. "fx" and "fy" represent respective maximum values of the distances in the x direction and the y direction and a range (which can be regarded as a smoothing range) of the pixel positions to be referred with respect to the specified pixel position. "$A(xn+k, yn+l)$" represents an image reference value at the pixel position of the coordinates $(xn+k, yn+l)$. "$S(xn+k, yn+l)$" represents a reference sharpness at the pixel position of the coordinates $(xn+k, yn+l)$. Herein, it is assumed that the reference sharpness is normalized to a value from 0 to 1. "$\sigma_d$" represents a weighting factor for the distance and "$\sigma_s$" represents a weighting factor for the reference sharpness. In Eq. 2, a weighting amount for the distance and a weighting amount for the reference sharpness are represented by a Gaussian factor.

In Eq. 2, the composite height at the specified pixel position is calculated by reflecting the image reference values of the surrounding pixel positions of the specified pixel position on the image reference value at the specified pixel position. In other words, the composite height at the specified pixel position is calculated by using the image reference values in a pixel position group including the specified pixel position and the surrounding pixel positions of the specified pixel position. At that time, to the image reference value at the surrounding pixel position, given are a weight in accordance with the distance between the surrounding pixel position and the specified pixel position and a weight in accordance with the reference sharpness at the surrounding pixel position. In more detail, as the distance of the pixel position from the specified pixel position decreases, an effect (weight) that the image reference value of the pixel position produces on the composite height increases. Further, as the reference sharpness at the surrounding pixel position increases, an effect that the image reference value of the surrounding pixel position produces on the composite height increases.

In the height map generation part 505, by using Eq. 2, the composite heights at all the pixel positions are calculated. A height map indicating the composite heights at all the pixel positions is thereby calculated (Step S15). Like the luminance value of the all-in-focus image G10, the composite height at the specified pixel position is obtained from the image reference values in the pixel position group including the specified pixel position and surrounding pixel positions of the specified pixel position, and therefore an appropriate height map adjusted to the all-in-focus image G10 can be obtained. As described later, the height map is used for analysis of the all-in-focus image G10. The composite height may be represented as a height from a predetermined reference position inside the well 21 on the basis of the distance between the focal positions used for the acquisition of the plurality of picked-up images G0 to G3 in Step S11.

Subsequently, in the target area specifying part 506, each analysis target area is specified and extracted in the all-in-focus image G10 (Step S16). FIG. 12 is a view showing an analysis target area R1. The analysis target area R1 is an area indicating a portion of the sample 9 in the all-in-focus image G10. In a case where a plurality of portions of the sample 9 are dispersed in the all-in-focus image G10, respective analysis target areas R1 are individually extracted. For specifying the analysis target area R1, used is a publicly-known method such as binarization using a predetermined threshold value, segmentation using Deep Learning, or the like.

After the analysis target area R1 is extracted, the feature value calculation part 507 calculates a feature value on the height of each analysis target area R1 by using the height map (Step S17). In the analysis target area R1, for example, an average value of the heights, a mode value thereof, variation (standard deviation or the like) thereof, or the like is calculated as the feature value. The feature value of each analysis target area R1 is used to grasp the state of the sample 9, or the like. Thus, processing for generating the all-in-focus image and the height map in the image pickup apparatus 1 is completed.

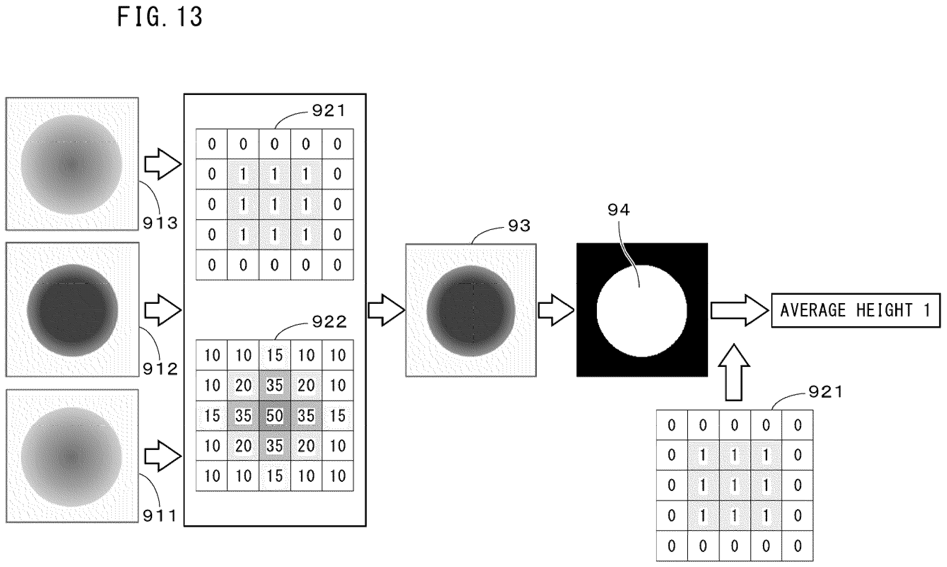

Herein, Comparative Example of the above-described image processing for generating the all-in-focus image and the height map will be described. The processing of Comparative Example is the same as that shown in FIG. 5 except that the array of the image reference values shown in FIG. 8 is used as the height map without any change. In the processing of Comparative Example, for example, in a case where a plurality of picked-up images 911 to 913 shown in the leftmost part of FIG. 13 are prepared, a height map 921 (i.e., an array of the image reference values) shown in the upper stage of the second part from the left side and an array 922 of the reference sharpnesses shown in the lower stage thereof are acquired, to thereby generate an all-in-focus image 93 shown in the third part from the left side. At that time, paying attention to the central pixel position, a luminance value at the central pixel position is calculated in consideration of the image reference values at the surrounding pixel positions or the like, but since each of the image reference values at the surrounding pixel positions is the same as the image reference value at the central pixel position (see the height map 921), the effect of the surrounding pixel positions is not high. Therefore, in a relation between the central pixel position and the surrounding pixel positions, there is not a large discrepancy (difference) between the luminance values of the all-in-focus image 93 and the heights indicated by the height map 921. As a result, it is possible to calculate an appropriate feature value (herein, an average height) for an analysis target area 94 shown in the fourth part from the left side by using the height map 921.

On the other hand, in the processing of Comparative Example, in a case where the plurality of picked-up images G0 to G3 shown in FIG. 7 are prepared, for example, since each of the image reference values at the surrounding pixel positions is largely different from the image reference value at the central pixel position (see FIG. 8) in the calculation of the luminance value at the central pixel position of the all-in-focus image, the effect of the surrounding pixel positions becomes higher. In other words, in the relation between the central pixel position and the surrounding pixel positions, there arises a large discrepancy between the luminance values of the all-in-focus image and the heights indicated by the height map (herein, the array of the image reference values shown in FIG. 8). As a result, it is impossible to calculate an appropriate feature value adjusted to the all-in-focus image for the analysis target area.

In contrast to this, the image processing method shown in FIG. 5 includes a step of generating the all-in-focus image by calculating the luminance value at each pixel position of the all-in-focus image on the basis of the image reference values in the pixel position group including the pixel position and the surrounding pixel positions of the pixel position (Step S14) and a step of generating the height map by acquiring the composite height at each pixel position on the basis of the image reference values in the pixel position group including the pixel position and the surrounding pixel positions of the pixel position (Step S15). Thus, in both the generation of the all-in-focus image and the generation of the height map, by considering the image reference values at the surrounding pixel positions of each pixel position or the like, it becomes possible to prevent or suppress a large discrepancy from arising between the luminance values of the all-in-focus image and the heights (composite heights) indicated by the height map in the relation between each pixel position and the surrounding pixel positions thereof. As a result, it is possible to generate a smooth all-in-focus image and an appropriate height map adjusted to the all-in-focus image.

Preferably, the above-described image processing method further includes a step of specifying the analysis target area in the all-in-focus image (Step S16) and a step of calculating the feature value on the height of the analysis target area by using the height map (Step S17). It is thereby possible to calculate an appropriate feature value adjusted to the all-in-focus image (i.e., a feature value of the height having an accurate relation with the all-in-focus image) and appropriately analyze the analysis target area.

Preferably, the above-described pixel position group in Step S14 and that in Step S15 are the same as each other. It is thereby possible to acquire a more appropriate height map adjusted to the all-in-focus image. Further, depending on the accuracy required for the height map, the above-described pixel position group in Step S14 and that in Step S15 may be partially different from each other.

Preferably, in Step S15, the composite height at each pixel position is calculated by reflecting the image reference values at the surrounding pixel positions on the image reference value at the pixel position with such weighting as to increase the effect as the sharpness increases. Thus, by reflecting the image reference values at the surrounding pixel positions on the image reference value at each pixel position in consideration of the sharpness, it becomes possible to acquire a preferable height map. Further, also in the generation of the all-in-focus image, for calculation of the luminance value at each pixel position, the image reference values at the surrounding pixel positions are referred with such weighting as to increase the effect as the sharpness increases. It thereby becomes possible to further reduce the discrepancy between the luminance values of the all-in-focus image and the composite heights indicated by the height map.

Preferably, in Step S15, the composite height at each pixel position is calculated by reflecting the image reference values at the surrounding pixel positions on the image reference value at the pixel position with such weighting as to increase the effect as the distance decreases. Thus, by reflecting the image reference values at the surrounding pixel positions on the image reference value at each pixel position in consideration of the distance, it becomes possible to acquire a preferable height map. Further, also in the generation of the all-in-focus image, for calculation of the luminance value at each pixel position, the image reference values at the surrounding pixel positions are referred with such weighting as to increase the effect as the distance decreases. It thereby becomes possible to further reduce the discrepancy between the luminance values of the all-in-focus image and the composite heights indicated by the height map. Further, in the calculation of the composite height in Step S15, the weighting as to the sharpness and/or the distance may be omitted.

Though only one image reference value is determined for each pixel position in Step S13 in the above-described exemplary processing, M image reference values (M is an integer not smaller than 2 and smaller than the number of picked-up images) corresponding to the higher-order M sharpnesses, respectively, may be determined, like in the technique disclosed in Japanese Patent Application Laid Open Gazette No. 2022-51094 (above-described Document 2), which is incorporated by reference. In the following description, at each pixel position, the number for the picked-up image having the highest sharpness is referred to as "a first image reference value", the number for the picked-up image having the second highest sharpness is referred to as "a second image reference value", ..., and the number for the picked-up image having the M-th highest sharpness is referred to as "an M-th image reference value".

The image reference value determination part 503 also specifies at each pixel position the sharpnesses (i.e., the reference sharpnesses) corresponding to the first to M-th image reference values, respectively. The reference sharpness of the first image reference value is the highest sharpness, the reference sharpness of the second image reference value is the second highest sharpness, and the reference sharpness of the M-th image reference value is the M-th highest sharpness. The all-in-focus image generation part 504 generates the all-in-focus image by calculating the luminance value at each pixel position of the all-in-focus image by using, for example, Eq. 3 (Step S14).

$$(\text{Eq. 3})$$

$$V(xn, yn) = \frac{\sum_{k=-fx}^{fx} \sum_{l=-fy}^{fy} \sum_{m=1}^{M} I\left(A(m, xn+k, yn+l), xn, yn\right)\mathrm{COE}(k, l, m)}{\sum_{k=-fx}^{fx} \sum_{l=-fy}^{fy} \sum_{m=1}^{M} \mathrm{COE}(k, l, m)}$$

$$\mathrm{COE}(k, l, m) = \exp\left(-\frac{k^2 + l^2}{2\sigma_d^2}\right)\exp\left(-\frac{\left(1 - S(m, xn+k, yn+l)\right)^2}{2\sigma_s^2}\right)$$

In Eq. 3, "I(A(m, xn+k, yn+l), xn, yn)" represents a luminance value at the specified pixel position of the coordinates (xn, yn) in the picked-up image indicated by the m-th image reference value A(m, xn+k, yn+l) at the pixel position of the coordinates (xn+k, yn+l). "S(m, xn+k, yn+l)" represents a reference sharpness of the m-th image reference value at the pixel position of the coordinates (xn+k, yn+l). M refers to the number of image reference values at each pixel position. Except the above, Eq. 3 is the same as Eq. 1. In Eq. 3, the luminance value at the specified pixel position of the all-in-focus image is calculated by using a plurality of luminance values derived from the first to M-th image reference values in the pixel position group including the specified pixel position and the surrounding pixel positions of the specified pixel position (Step S15).

The height map generation part 505 generates the height map by calculating the composite height at each pixel position by using, for example, Eq. 4.

(Eq. 4)

$$D(xn, yn) = \frac{\sum_{k=-fx}^{fx} \sum_{l=-fy}^{fy} \sum_{m=1}^{M} A(m, xn + k, yn + l) \, COE(k, l, m)}{\sum_{k=-fx}^{fx} \sum_{l=-fy}^{fy} \sum_{m=1}^{M} COE(k, l, m)}$$

$$COE(k, l, m) = \exp\left(-\frac{k^2 + l^2}{2\sigma_d^2}\right) \exp\left(-\frac{\left(1 - S(m, xn + k, yn + l)\right)^2}{2\sigma_s^2}\right)$$

In Eq. 4, "A(m, xn+k, yn+l)" represents the m-th image reference value at the pixel position of the coordinates (xn+k, yn+l). "S(m, xn+k, yn+l)" represents a reference sharpness of the m-th image reference value at the pixel position of the coordinates (xn+k, yn+l). M refers to the number of image reference values at each pixel position. Except the above, Eq. 4 is the same as Eq. 2. In Eq. 4, the composite height at the specified pixel position is calculated by using the first to M-th image reference values in the pixel position group including the specified pixel position and the surrounding pixel positions of the specified pixel position. The operations in Steps S16 and S17 are the same as those in the above-described exemplary processing.

Thus, in Step S13, at each pixel position, by comparison among the plurality of sharpnesses, the number for at least one picked-up image to be referred for determination of the luminance value at the pixel position of the all-in-focus image has only to be determined as the image reference value. It thereby becomes possible to generate a smooth all-in-focus image and an appropriate height map adjusted to the all-in-focus image, by using the image reference value.

Next, another exemplary processing of Step S15 will be described. In another exemplary processing, the height map generation part 505 calculates an evaluation value as to the sharpness at each pixel position for each of the plurality of picked-up images. Specifically, first, at the pixel position (i.e., the specified pixel position) of any coordinates (xn, yn) in each picked-up image, a weighted sharpness Sp is calculated for each of the surrounding pixel positions in a predetermined setting range by using Eq. 5.

(Eq. 5)

$$Sp(xn + k, yn + l) = \exp\left(-\frac{k^2 + l^2}{2\sigma_d^2}\right) S(xn + k, yn + l)$$

In Eq. 5, "k" and "l" represent respective distances in the x direction and the y direction between the pixel position (surrounding pixel position) to be referred with respect to the specified pixel position and the specified pixel position. "S(xn+k, yn+l)" represents a sharpness at the pixel position of the picked-up image. "$\sigma_d$" represents a weighting factor for the distance. Subsequently, a sum of the weighted sharpnesses Sp at the pixel positions (including the specified pixel position) within the above-described setting range with respect to the specified pixel position is obtained as the evaluation value. Thus, in each of the plurality of picked-up images, the evaluation value at each pixel position is obtained. Then, among the evaluation values of the plurality of picked-up images, the number for the picked-up image having the largest evaluation value is acquired as the composite height at the pixel position.

Thus, in above-described another exemplary processing of Step S15, by using the sharpnesses in the pixel position group including each pixel position and the surrounding pixel positions of the pixel position, the composite height at the pixel position is acquired. Further, in the first exemplary processing of Step S15, by using the image reference values or the image reference values and the sharpnesses in the pixel position group with respect to each pixel position, the composite height at the pixel position is acquired. Thus, by using the image reference values and/or the sharpnesses in the pixel position group including each pixel position and the surrounding pixel positions of the pixel position, it becomes possible to acquire an appropriate composite height adjusted to the all-in-focus image at the pixel position.

In the above-described method using Eq. 2, for example, in a case where two elements which have different heights in the direction of the optical axis J1 and each have a high sharpness are present at one pixel position, the composite height at the pixel position is in the vicinity of the center of the two elements, and this is sometimes an unpreferable case. In such a case, above-described another exemplary processing of Step S15 may be modified, to acquire a plurality of height maps,

Specifically, among the evaluation values of the plurality of picked-up images, the number for the picked-up image having the largest evaluation value is acquired as "a first composite height", the number for the picked-up image having the second largest evaluation value is acquired as "a second composite height", ..., and the number for the picked-up image having the N-th largest evaluation value (N is an integer not smaller than 2 and smaller than the number of picked-up images) is acquired as "an N-th composite height". A first height map indicating the first composite height of all the pixel positions, a second height map indicating the second composite height of all the pixel positions, ..., and an N-th height map indicating the N-th composite height of all the pixel positions are thereby generated. With reference to the first to N-th height maps, at each pixel position, it becomes possible to grasp a distribution or the like of the focus positions in the direction of the optical axis J1.

In the image processing method, the image processing apparatus, and the image pickup apparatus 1 described above, various modifications can be made.

The above-described Eqs. 1 to 5 used in the all-in-focus image generation part 504 and the height map generation part 505 are just examples and may be changed as appropriate.

Though a focal position changing mechanism for changing the focal position of the image pickup part 13 along the optical axis J1 is implemented by the up-and-down moving mechanism 14 for moving the image pickup part 13 in the exemplary case shown in FIG. 1, the focal position changing mechanism may be implemented by a mechanism for moving some lenses or the like in the image pickup part 13 along the optical axis J1. Further, a mechanism for moving the sample 9 along the optical axis J1 may be provided as the focal position changing mechanism.

The height map may be used for any purpose other than the calculation of the feature value of the analysis target area.

Though the transmission image of the sample 9 is acquired as the picked-up image in the above-described preferred embodiment, a fluorescent image or the like of the sample 9 may be acquired as the picked-up image. Further, the target may be any object other than the cells or the like.

The image processing part 500 (image processing apparatus) may be used independently of the image pickup apparatus 1.

The configurations in the above-described preferred embodiment and variations may be combined as appropriate only if those do not conflict with one another.

While the invention has been shown and described in detail, the foregoing description is in all aspects illustrative and not restrictive. It is therefore understood that numerous modifications and aspects can be devised without departing from the scope of the invention.

REFERENCE SIGNS LIST

| | |
|---|---|
| 1 | Image pickup apparatus |
| 5 | Control part |
| 9 | Sample |
| 12 | Lighting part |
| 13 | Image pickup part |
| 14 | Up-and-down moving mechanism |
| 500 | Image processing part |
| 501 | Image memory |
| 502 | Sharpness calculation part |
| 503 | Image reference value determination part |
| 504 | All-in-focus image generation part |
| 505 | Height map generation part |
| 506 | Target area specifying part |
| 507 | Feature value calculation part |

| 572 | Program |
| G0 to G3 | Picked-up image |
| G10 | All-in-focus image |
| J1 | Optical axis |
| R1 | Analysis target area |
| S11 to S17 | Step |

**Claims**

1. An image processing method for generating an all-in-focus image (G10) and a height map to be used for analysis of said all-in-focus image, comprising:

   a) preparing a plurality of picked-up images (G0 to G3) acquired by imaging a target (9) while changing a focal position along an optical axis (J1) (S11);
   b) calculating a plurality of sharpnesses from said plurality of picked-up images, respectively, at each pixel position (S12);
   c) determining a number for at least one picked-up image to be referred for determination of a luminance value at said each pixel position of an all-in-focus image, as an image reference value, by comparison among said plurality of sharpnesses at said each pixel position (S13);
   d) generating said all-in-focus image by calculating said luminance value at said each pixel position of said all-in-focus image on the basis of image reference values in a pixel position group including said each pixel position and surrounding pixel positions of said each pixel position (S14); and
   e) generating a height map by acquiring a composite height at said each pixel position on the basis of image reference values and/or sharpnesses in a pixel position group including said each pixel position and surrounding pixel positions of said each pixel position (S15).

2. The image processing method according to claim 1, wherein
   said pixel position group in said operation d) is the same as that in said operation e).

3. The image processing method according to claim 1 or 2, wherein
   said composite height at said each pixel position is calculated by reflecting image reference values at said surrounding pixel positions on said image reference value at said each pixel position with such weighting as to increase an effect as a sharpness increases in said operation e).

4. The image processing method according to any one of claims 1 to 3, wherein
   said composite height at said each pixel position is calculated by reflecting image reference values at said surrounding pixel positions on said image reference value at said each pixel position with such weighting as to increase an effect as a distance decreases in said operation e).

5. The image processing method according to any one of claims 1 to 4, further comprising:

   specifying an analysis target area (R1) in said all-in-focus image (S16); and
   calculating a feature value on a height of said analysis target area by using said height map.

6. An image processing apparatus (500) for generating an all-in-focus image (G10) and a height map to be used for analysis of said all-in-focus image, comprising:

   an image memory (501) for memorizing therein a plurality of picked-up images (G0 to G3) acquired by imaging a target (9) while changing a focal position along an optical axis (J1);
   a sharpness calculation part (502) for calculating a plurality of sharpnesses from said plurality of picked-up images, respectively, at each pixel position;
   an image reference value determination part (503) for determining a number for at least one picked-up image to be referred for determination of a luminance value at said each pixel position of an all-in-focus image, as an image reference value, by comparison among said plurality of sharpnesses at said each pixel position;
   an all-in-focus image generation part (504) for generating said all-in-focus image by calculating said luminance value at said each pixel position of said all-in-focus image on the basis of image reference values in a pixel position group including said each pixel position and surrounding pixel positions of said each pixel position; and
   a height map generation part (505) for generating a height map by acquiring a composite height at said each pixel position on the basis of image reference values and/or sharpnesses in a pixel position group including said each pixel position and surrounding pixel positions of said each pixel position.

7. The image processing apparatus according to claim 6, wherein
said pixel position group in said all-in-focus image generation part is the same as that in said height map generation part.

8. The image processing apparatus according to claim 6 or 7, wherein
said height map generation part reflects image reference values at said surrounding pixel positions on said image reference value at said each pixel position with such weighting as to increase an effect as a sharpness increases, to thereby acquire said composite height at said each pixel position.

9. The image processing apparatus according to any one of claims 6 to 8, wherein
said height map generation part reflects image reference values at said surrounding pixel positions on said image reference value at said each pixel position with such weighting as to increase an effect as a distance decreases, to thereby acquire said composite height at said each pixel position.

10. The image processing apparatus according to any one of claims 6 to 9, further comprising:

a target area specifying part (506) for specifying an analysis target area (R1) in said all-in-focus image; and
a feature value calculation part (507) for calculating a feature value on a height of said analysis target area by using said height map.

11. An image pickup apparatus (1), comprising:

said image processing apparatus according to any one of claims 6 to 10;
an image pickup part (13) for imaging said target;
a lighting part (12) for emitting light toward said target; and
a focal position changing mechanism (14) for changing a focal position of said image pickup part along an optical axis (J1).

12. A computer-readable program (572) to cause a computer (5) to generate an all-in-focus image (G10) and a height map to be used for analysis of said all-in-focus image,
said program being executed by a computer to cause said computer to perform:

a) preparing a plurality of picked-up images (G0 to G3) acquired by imaging a target (9) while changing a focal position along an optical axis (J1) (S11);
b) calculating a plurality of sharpnesses from said plurality of picked-up images, respectively, at each pixel position (S12);
c) determining a number for at least one picked-up image to be referred for determination of a luminance value at said each pixel position of an all-in-focus image, as an image reference value, by comparison among said plurality of sharpnesses at said each pixel position (S13);
d) generating said all-in-focus image by calculating said luminance value at said each pixel position of said all-in-focus image on the basis of image reference values in a pixel position group including said each pixel position and surrounding pixel positions of said each pixel position (S14); and
e) generating a height map by acquiring a composite height at said each pixel position on the basis of image reference values and/or sharpnesses in a pixel position group including said each pixel position and surrounding pixel positions of said each pixel position (S15).

FIG. 1

FIG. 2

FIG. 3

FIG. 4

CONTROL PART — 5 — 500

IMAGE PROCESSING PART

IMAGE MEMORY — 501

SHARPNESS CALCULATION PART — 502

IMAGE REFERENCE VALUE
DETERMINATION PART — 503

ALL-IN-FOCUS IMAGE
GENERATION PART — 504

HEIGHT MAP GENERATION PART — 505

TARGET AREA SPECIFYING PART — 506

FEATURE VALUE CALCULATION PART — 507

FIG. 5

```
                    ┌──────────┐
                    │  START   │
                    └────┬─────┘
                         │
                         ▼
          ┌────────────────────────────┐
          │  PREPARE PICKED-UP IMAGES   │────S11
          └──────────────┬─────────────┘
                         │
                         ▼
      ┌──────────────────────────────────────┐
      │ CALCULATE SHARPNESS AT EACH PIXEL     │────S12
      │ POSITION IN PICKED-UP IMAGES          │
      └──────────────────┬───────────────────┘
                         │
                         ▼
   ┌───────────────────────────────────────────────┐
   │ DETERMINE IMAGE REFERENCE VALUE FOR EACH       │────S13
   │ PIXEL POSITION                                 │
   └───────────────────┬───────────────────────────┘
                         │
                         ▼
        ┌─────────────────────────────┐
        │  GENERATE ALL-IN-FOCUS IMAGE │────S14
        └──────────────┬──────────────┘
                         │
                         ▼
          ┌────────────────────────┐
          │  GENERATE HEIGHT MAP    │────S15
          └───────────┬────────────┘
                         │
                         ▼
       ┌──────────────────────────────┐
       │  SPECIFY ANALYSIS TARGET AREA │────S16
       └───────────────┬──────────────┘
                         │
                         ▼
   ┌────────────────────────────────────────────┐
   │ CALCULATE FEATURE VALUE OF ANALYSIS TARGET  │────S17
   │ AREA                                        │
   └────────────────────┬───────────────────────┘
                         │
                         ▼
                    ┌──────────┐
                    │   END    │
                    └──────────┘
```

FIG. 6

FIG. 7

G3

G2

G1

G0

FIG. 8

| 0 | 0 | 0 | 0 | 0 |
|---|---|---|---|---|
| 0 | 1 | 1 | 1 | 0 |
| 0 | 1 | 3 | 1 | 0 |
| 0 | 1 | 1 | 1 | 0 |
| 0 | 0 | 0 | 0 | 0 |

FIG. 9

| 10 | 10 | 15 | 10 | 10 |
|----|----|----|----|----|
| 10 | 20 | 35 | 20 | 10 |
| 15 | 35 | 25 | 35 | 15 |
| 10 | 20 | 35 | 20 | 10 |
| 10 | 10 | 15 | 10 | 10 |

FIG. 10

FIG. 11

G10

FIG. 12

R1

FIG. 13

Europäisches
Patentamt

European
Patent Office

Office européen
des brevets

# EUROPEAN SEARCH REPORT

**Application Number**

EP 25 18 3354

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2014/083574 A2 (LARSEN & TOUBRO LTD [IN]) 5 June 2014 (2014-06-05) * the whole document * ----- | 1-12 | INV. G06T5/50 G06T5/73 |
| A | US 2021/195079 A1 (YASUDA TAKUYA [JP]) 24 June 2021 (2021-06-24) * the whole document * ----- | 1-12 | |

| | |
|---|---|
| | TECHNICAL FIELDS SEARCHED (IPC) |
| | G06T |

The present search report has been drawn up for all claims

| Place of search | Date of completion of the search | Examiner |
|---|---|---|
| Munich | 13 November 2025 | Celik, Hasan |

EPO FORM 1503 03.82 (P04C01)

**EP 4 704 025 A1**

## ANNEX TO THE EUROPEAN SEARCH REPORT
## ON EUROPEAN PATENT APPLICATION NO.

EP 25 18 3354

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2025

| Patent document cited in search report | Publication date | Patent family member(s) | Publication date |
|---|---|---|---|
| WO 2014083574 A2 | 05-06-2014 | EP 2926558 A2 | 07-10-2015 |
| | | WO 2014083574 A2 | 05-06-2014 |
| US 2021195079 A1 | 24-06-2021 | CN 109691083 A | 26-04-2019 |
| | | EP 3509290 A1 | 10-07-2019 |
| | | JP 6301416 B2 | 28-03-2018 |
| | | JP 2018042006 A | 15-03-2018 |
| | | US 2021195079 A1 | 24-06-2021 |
| | | WO 2018042786 A1 | 08-03-2018 |

EPO FORM P0459

For more details about this annex : see Official Journal of the European Patent Office, No. 12/82

24

**EP 4 704 025 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2024144088 A
- JP 2018042006 A
- JP 2022051094 A
- JP 2015111822 A